Europäisches Patentamt

European Patent Office

Office européen des brevets

(11) Numéro de publication: **0 252 800 B1**

(19)

(12) **FASCICULE DE BREVET EUROPEEN**

(45) Date de publication de fascicule du brevet:
15.05.91

(51) Int. Cl.⁵: **H01H 25/04**, B60Q 1/14

(21) Numéro de dépôt: **87401449.1**

(22) Date de dépôt: **24.06.87**

(54) Commutateur en particulier pour la commande des lave-essuie-glace de véhicules automobiles.

(30) Priorité: **26.06.86 FR 8609283**

(43) Date de publication de la demande:
**13.01.88 Bulletin 88/02**

(45) Mention de la délivrance du brevet:
**15.05.91 Bulletin 91/20**

(84) Etats contractants désignés:
**DE ES GB IT**

(56) Documents cités:
**DE-A- 1 959 787        DE-A- 3 115 793
DE-U- 7 320 723        GB-A- 1 257 941
GB-A- 2 152 289        US-A- 4 123 632
US-A- 4 408 104**

(73) Titulaire: **JAEGER
2, rue Baudin
F-92303 Levallois-Perret(FR)**

(72) Inventeur: **Lagier, Daniel
135, rue des Ombraies
F-92000 Nanterre(FR)**
Inventeur: **Rollet, Gérard
41, Bd de Lorraine
F-95240 Cormeilles-en-Parisis(FR)**

(74) Mandataire: **Martin, Jean-Jacques et al
Cabinet REGIMBEAU 26, Avenue Kléber
F-75116 Paris(FR)**

## Description

La présente invention concerne le domaine des commutateurs, et tout particulièrement des commutateurs pour la commande de lave-essuie-glace de véhicule automobile.

La présente invention concerne plus précisément un commutateur du type comprenant une porte-contact principal monté à pivotement dans un boîtier autour d'un premier axe, un porte-contact auxiliaire monté à pivotement sur le boîtier autour d'un second axe sensiblement orthogonal au premier axe, une manette engagée sur le porte-contact principal pour être liée à celui-ci lors d'une rotation autour du premier axe tout en pouvant pivoter librement par rapport au porte-contact principal lors d'un pivotement de la manette autour d'un axe perpendiculaire au premier axe, et des moyens de liaison assurant une liaison fonctionnelle entre la manette et le portecontact auxiliaire, telle que le pivotement de la manette et du porte-contact principal autour du premier axe n'agissent pas sur le porte-contact auxiliaire, mais que le pivotement de la manette autour dudit axe perpendiculaire au premier axe déplace le porte-contact auxiliaire à pivotement autour du second axe.

Un commutateur de ce type est décrit par exemple dans le document DE-U-73 20 723.

La présente invention a pour but de proposer un commutateur de conception simple, robuste et économique permettant de commander à l'aide d'une manette unique une multiplicité de fonctions.

Un but principal de la présente invention est de proposer un commutateur pour la commande de lave-essuie-glace de véhicule automobile apte à commander à l'aide d'une manette unique les organes essuie-lave glace avant et les organes essuie-lave vitre arrière, en autorisant une commande séparée des organes essuie-glace avant et essuie-vitre arrière et des organes lave-glace avant et lave-vitre arrière, et en permettant par ailleurs de choisir les vitesses de déplacement des organes essuie-glace avant parmi une pluralité de vitesses ou de modes d'entraînement disponibles.

Un autre but de la présente invention est de proposer un commutateur présentant un jeu de fonctionnement très faible.

Un autre but de la présente invention est de proposer un commutateur présentant un bruit de fonctionnement négligeable.

Ces différents buts sont atteints, selon la présente invention, grâce à un commutateur du type pré-cité dans lequel ledit axe perpendiculaire au priemier axe est parallèle au second axe et les moyens de liaison prévus entre la manette et le porte-contact auxiliaire sont formés d'un doigt de commande solidaire de la manette et formé d'un secteur d'anneau centré sur le premier axe.

De préférence, le doigt de commande précité est engagé dans une lumière traversant le porte-contact auxiliaire.

De préférence, selon l'invention, le commutateur comprend des moyens d'indexation du porte-contact principal comportant un pion supportant un galet sollicité par ressort contre un ensemble de cames définies sur le boîtier.

De façon avantageuse, le commutateur comprend de plus des moyens d'indexation du porte-contact auxiliaire comportant un organe d'indexation sollicité par ressort contre un ensemble de cames auxiliaires définies sur le porte-contact principal.

De façon avantageuse, selon l'invention, chaque porte-contact supporte deux plots de contact qui se déplacent contre des lamelles associées portées par le boîtier.

D'autres caractéristiques, buts et avantages de la présente invention apparaîtront à la lecture de la description détaillée qui va suivre et en regard des dessins annexés, donnés à titre d'exemples non limitatifs et sur lesquels :

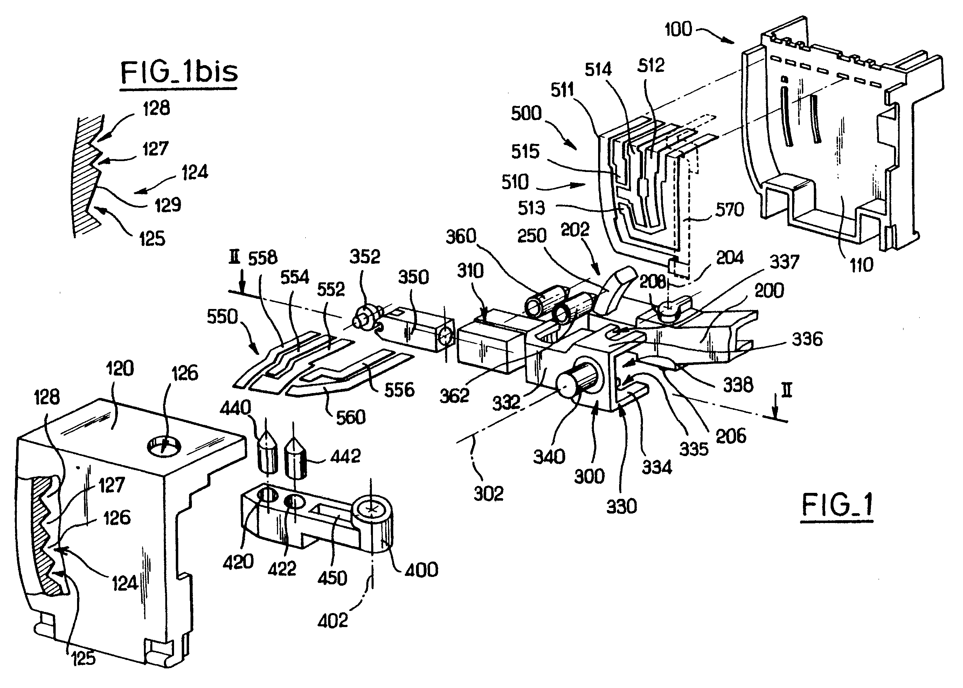

. la figure 1 représente une vue schématique en perspective éclatée d'un commutateur conforme à la présente invention,

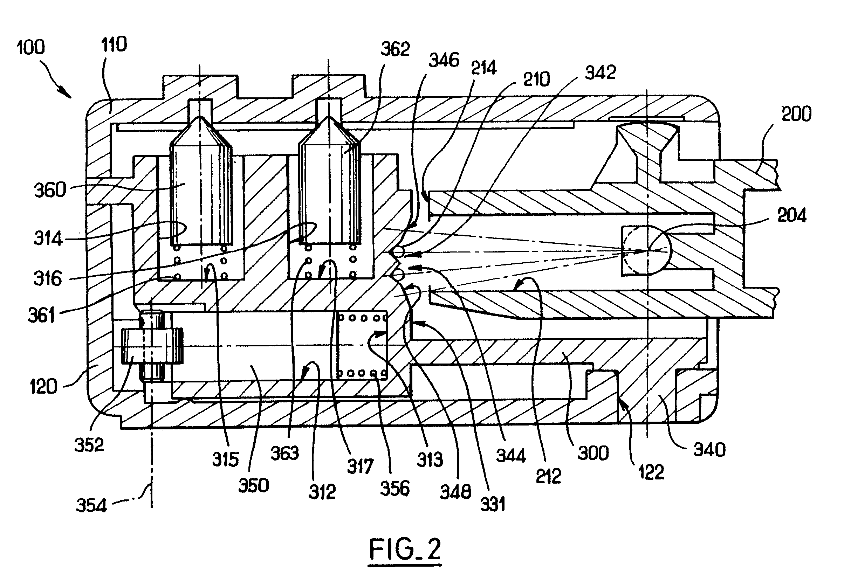

. la figure 2 représente une vue schématique en coupe du porte-contact principal intégré à ce commutateur selon un plan de coupe référencé II-II sur la figure 1,

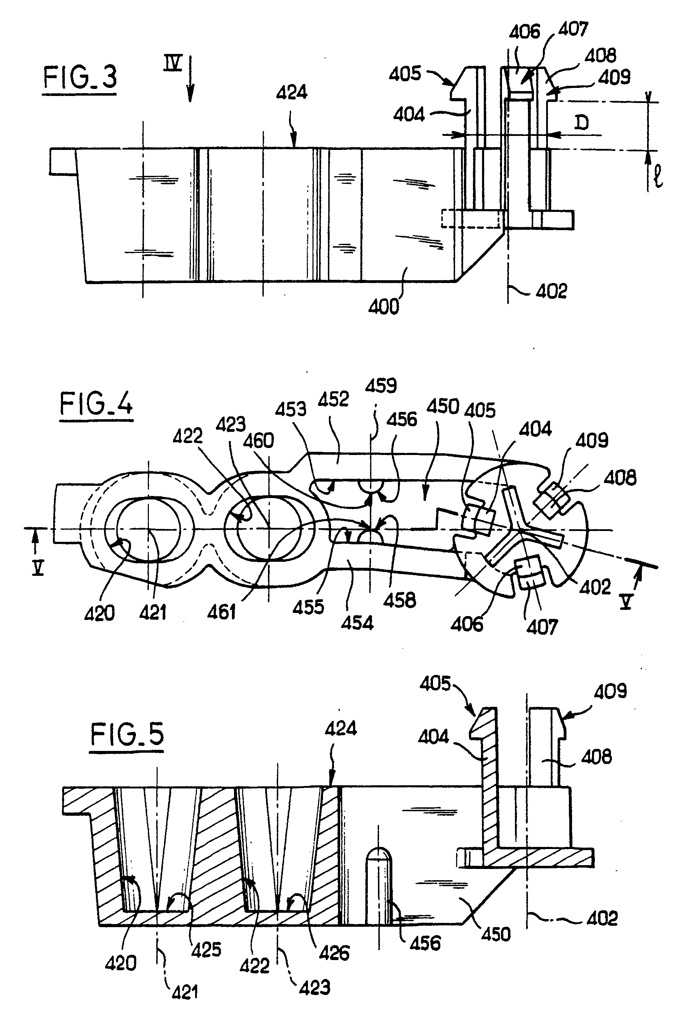

. la figure 3 représente une vue latérale schématique du porte-contact auxiliaire intégré à ce même commutateur,

. la figure 4 représente une vue de dessus de ce porte-contact auxiliaire selon une vue illustrée par la flèche référencée IV sur la figure 3,

. la figure 5 représente une vue en coupe du porte-contact auxiliaire selon des plans de coupe non coplanaires référencés V-V sur la figure 4,

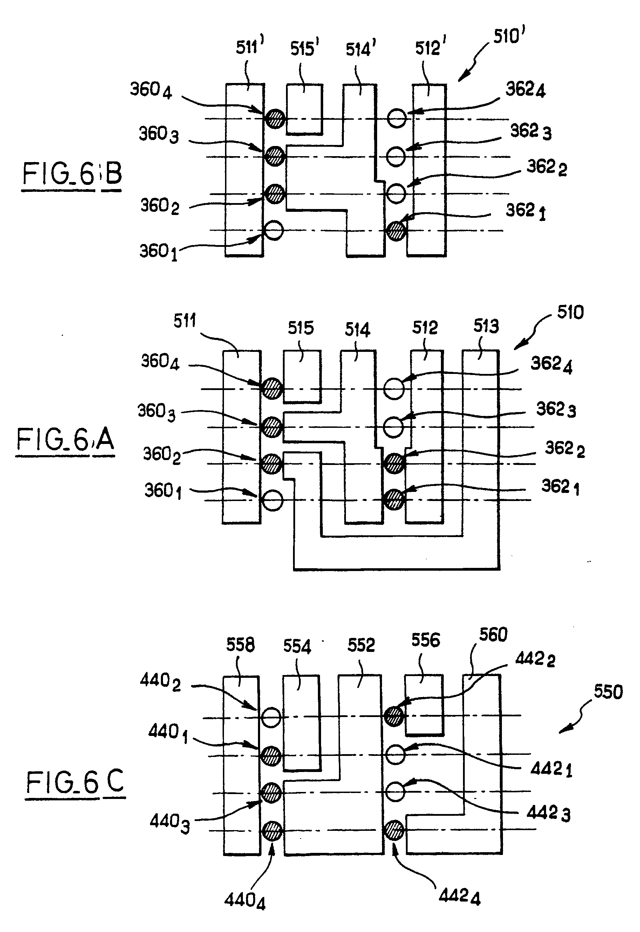

. la figure 6 représente schématiquement les lamelles de contact intégrées au commutateur conforme à la présente invention.

Pour l'essentiel, le commutateur, représenté sur les figures annexées, comprend un boîtier 100, une manette 200, un porte-contact principal 300, un porte-contact auxiliaire 400 et des lamelles de contacts électriques 500.

Le boîtier 100 est formé par assemblage de deux demi-boîtiers 110, 120.

Le porte-contact principal 300 est monté à pivotement surle demi-boîtier 120 autour d'un axe 302.

Le porte-contact principal 300 comprend plus précisément un bloc 310 solidaire d'un carter 330.

Le bloc 310 reçoit un pion d'indexage 350 et deux plots de contact 360, 362.

Le carter 330 est formé en combinaison d'une paroi plane 332 qui support deux voiles généralement parallèles entre eux 334, 336.

Ces voiles 334, 336 sont placés d'un même côté de la paroi 332.

La paroi 332 définit en combinaison avec les voiles 334, 336 un logement 338 généralement parallélépipèdique complémentaire de l'extrémité 202 de la manette placée dans le boîtier 100.

La paroi 332 supporte sur l'extérieur du logement 338 un tourillon cylindrique 340. Le tourillon cylindrique 340 est coaxial de l'axe 302 et s'étend perpendiculairement à la paroi 332.

Le tourillon 340 est supporté à pivotement autour de l'axe 302 dans un alésage 122 ménagé dans le demi-boîtier 120. On notera que l'axe de pivotement 302 du porte-contact principal s'étend sensiblement parallèlement aux voiles 334, 336.

Le bloc 310 du porte-contact principal 300 présente un alésage 312 qui s'étend parallèlement au plan moyen de la paroi 332 et des voiles 334, 336, c'est-à-dire perpendiculairement à l'axe d'articulation 302. L'alésage 312 présente une section droite complémentaire de celle du pion 350 précité, pour recevoir celui-ci. Sur son extrémité émergeant de l'alésage 312, le pion 350 porte à pivotement un galet 352. Le galet 352 est porté à pivotement sur le pion 350 autour d'un axe 354 parallèle à l'axe 302 précité.

Un ressort 356 intercalé,entre le fond 313 de l'alésage 312 et le pion 350, sollicite le pion 350 et le galet 352 vers l'extérieur de l'alésage 312, contre une paroi 124 du demi-boîtier 120 présentant une pluralité de crantages comme illustré sur la figure 1.

Le bloc 310 possède par ailleurs deux alésages 314, 316 parallèles entre eux et s'étendant sensiblement parallèlement à l'axe 302 de pivotement du porte-contact principal. Les alésages 314 et 316 débouchent sur le porte-contact principal 300 du même côté que le logement 338 défini par la paroi 332 et les voiles 334,336.

Les alésages 314 et 316 reçoivent respectivement les plots de contact 360 et 362 précités.

Des ressorts 361, 363 intercalés entre le fond 315, 317, respectivement, des alésages 314 et 316 et les plots de contact 360, 362 sollicitent ces derniers vers l'extérieur des alésages 314, 316 contre une série de lamelles 510 portées par le demi-boîtier 110 et dont la structure sera décrite plus en détail par la suite.

Comme indiqué précédemment, l'extrémité 202 de la manette 200 interne au boîtier 100 est engagée dans le logement 338 du porte-contact principal 300.

Compte tenu de l'engagement ainsi défini entre la manette 200 et le porte-contact principal 300, toute sollicitation à pivotement de la manette 200 autour de l'axe 302 précité induit un pivotement du porte-contact principal 300 autour du même axe 302. Par contre, lorsqu'un utilisateur exerce sur la manette 200 une sollicitation à pivotement autour d'un axe perpendiculaire au plan moyen des voiles 334, 336 (soit perpendiculairement à l'axe 302 précité) l'extrémité 202 de la manette 200 peut pivoter autour d'un axe 204 dans le logement 338 et n'agit pas sur le porte-contact principal 300.

En d'autres termes, l'engagement de l'extrémité 202 de la manette 200 dans le logement 338 du porte-contact principal définit une liaison fonctionnelle entre la manette 200 et le porte-contact principal 300 lors d'une rotation autour de l'axe 302 tout en autorisant un pivotement libre de la manette 200 par rapport au porte-contact principal 300 lors d'un pivotement de la manette autour de l'axe 204 perpendiculaire au plan moyen des voiles 334 et 336.

Le guidage à pivotement de la manette 200 sur le porte-contact principal 300 autour de l'axe 204 est défini par des tourillons 206, 208 portés sur des faces opposées de l'extrémité 202 de la manette, engagés respectivement dans des ouvertures 335, 337 de portée cylindrique réalisées respectivement dans les voiles 334 et 336 précités.

Un indexage de la manette 200 lors de son pivotement autour de l'axe 204 est défini par un pion 210. Celui-ci est logé dans un alésage 212 réalisé dans l'extrémité 202 de la manette. L'alésage 212 débouche sur la face d'extrémité 214 de la manette transversale à son axe longitudinal.

Le pion d'indexage 210 est sollicité, par un ressort non représenté sur les figures pour simplifier l'illustration, vers l'extérieur de l'alésage 212 contre une surface 331 du porte-contact principal 300. Cette face 331 correspond à la face du bloc 310 dirigée vers l'intérieur du logement 338. Elle s'étend perpendiculairement au plan moyen de la paroi 332 et des voiles 334 et 336.

La face 331 précitée présente une pluralité de crantages 342, 344 recevant le pion d'indexage 210.

Le porte-contact auxiliaire 400 est porté à pivotement sur le demi-boîtier 120 autour d'un axe 402 s'étendant parallèlement à l'axe 204 précité.

Le guidage du porte-contact auxiliaire 400 à pivotement autour de l'axe 402 sur le demi-boîtier 120 est défini par une pluralité de lamelles 404, 406 et 408 solidaires du porte-contact auxiliaire 400, s'étendant sensiblement parallèlement entre elles et définissant une enveloppe généralement cylindrique.

Ces lamelles 404, 406, 408 sont équi-réparties autour de l'axe 402 précité. Selon le mode de réalisation représenté sur les figures, il est ainsi prévu trois lamelles. Ce nombre ne doit cependant pas être considéré comme limitatif.

Les lamelles 404, 406 et 408 sont destinées à être introduites dans un alésage 126 ménagé dans le demi-boîtier 120.

Le diamètre (référencé schématiquement D sur la figure 3) défini par l'enveloppe cylindrique des lamelles 404, 406 et 408 correspond sensiblement au diamètre de l'alésage 126 réalisé dans le demi-boîtier 120.

Chacune des lamelles 404, 406 et 408 porte au voisinage de son extrémité libre, et sur sa surface extérieure, une denture de section droite triangulaire 405, 407, 409.

Ces dentures définissent une enveloppe de section droite supérieure à celle de l'alésage 126 afin de maintenir le porte-contact auxiliaire 400 sur le demi-boîtier 120 après engagement élastique des lamelles 404, 406 et 408 dans l'alésage 126.

Au cours de cet engagement, les lamelles élastiques 404, 406 et 408 fléchissent élastiquement en rapprochement de l'axe 402, avant de reprendre leur position de repos telle qu'illustré sur la figure 3 lorsque les dentures 405, 407 et 409 dépassent l'épaisseur de la paroi du demi-boîtier 120 présentant l'alésage 126.

Pour cela la distance 1 (illustrée sur la figure 3) séparant les dentures 405, 407 et 409 de la base des lamelles 404, 406 et 408 doit être au moins légèrement supérieure à l'épaisseur de la paroi du demi-boîtier 120 présentant l'alésage 126.

Le porte-contact auxiliaire 400 possède par ailleurs deux alésages borgnes 420, 422 recevant des plots de contact 440, 442.

Les axes 421, 423 des alésages borgnes 420, 422 sont généralement parallèles entre eux et parallèles à l'axe 402 de pivotement du porte-contact auxiliaire 400.

Les alésages borgnes 420, 422 débouchent sur une face commune 424 du porte-contact auxiliaire 400 transversal à l'axe de pivotement 402 et dirigée vers la paroi du demi-boîtier 120 présentant l'alésage 126.

Selon le mode de réalisation réprésenté sur les figures (voir notamment figure 5) les alésages borgnes 420, 422 sont généralement tronconiques évasés vers leur ouverture, soit vers la face 424 du porte-contact auxiliaire 400.

Des ressorts intercalés entre le fond 425, 426 des alésages 420, 422 et les plots de contact 440, 442 sollicitent ces derniers vers des lames de contact 550 supportées par la paroi du demi-boîtier 120 présentant l'alésage 126.

On remarquera à l'examen de la figure 4 que de préférence les contours d'ouverture des alésages 420, 422, définis au niveau de la surface 424 du porte-contact auxiliaire 400 sont de forme ovoïde, la plus petite largeur de ce contour d'ouverture considérée parallèlement à l'axe de pivotement 302 coïncidant sensiblement avec le diamètre des plots de contacts 440, 442 tandis que la plus grande longueur de ce contour d'ouverture des alésages 420, 422 considérée perpendiculairement à l'axe 302 est largement supérieure au diamètre des plots de contact 440, 442 pour autoriser un débattement des plots de contact transversalement à l'axe 302 afin de s'adapter étroitement aux lames de contact 550 portées par le boîtier 100.

Comme cela apparaît à l'examen de la figure 4, le porte-contact auxiliaire 400 est de plus muni d'un évidement 450 traversant parallèlement à l'axe de pivotement 402.

L'évidement 450 est défni par deux voiles principaux 452, 454 qui s'étendent sensiblement parallèlement à la paroi 332 du porte-contact principal 300.

Les voiles 452, 454 possèdent sur leur surface interne en regard 453, 455, parallèles entre elles, des protubérances hémi-cylindriques 456, 458. Ces dernières sont définies par des génératrices parallèles à l'axe de pivotement 402. Les génératrices 460, 461 des protubérances 456, 458, les plus éloignées des voiles 452, 454 qui les supportent sont définies dans un plan 459 s'étendant parallèlement aux axes d'articulation 402 et 302.

L'évidement 450 ménagé dans le porte-contact auxiliaire 400 reçoit un doigt de commande 250 solidaire de l'extrémité 202 de la manette.

Plus précisément encore, comme cela est illustré sur la figure 1, le doigt de commande 250 est incurvé. Ce doigt de commande 250 est formé d'un secteur annulaire centré sur l'axe de pivotement 302.

La distance séparant les génératrices 460, 461 précitées des protubérances hémi-cylindriques 456, 458 égale sensiblement la largeur du doigt de commande 250 considéré parallèlement à l'axe 302.

Ainsi, le doigt de commande 250 repose contre le porte-contact auxiliaire 400 au niveau des génératrices 460 et 461 précitées pour définir une liaison fonctionnelle entre la manette 200 et le porte-contact auxiliaire 400, telle que le pivotement de la manette 200 et du porte-contact principal 300 autour du premier axe 302 n'agisse pas sur le porte-contact auxiliaire 400 (le doigt de commande 250 se déplaçant alors dans l'évidement 450 en glissant sur les génératrices 460, 461) mais que le pivotement de la manette 200 autour de l'axe 204 parallèle à l'axe 402 déplace le porte-contact auxiliaire 400 à pivotement autour de ce dernier puisque le doigt de commande 250 repose contre les génératrices 460 et 461 précitées.

De préférence, la surface 124 du demi-boîtier 120 présente quatre crans 125, 126, 127 et 128 définissant quatre points d'indexation stable du porte-contact principal 300, lors de sa rotation autour de l'axe 302, par l'intermédiaire du galet 352.

Les crans 125, 126, 127 et 128 sont pour cela concaves en direction du galet d'indexation 352 et répartis sur une surface généralement cylindrique de révolution autour de l'axe 302.

Les quatre positions stables correspondantes des plots de contact 360, 362 sont référencées $360_1$, $362_1$ ; $360_2$, $362_2$ ; $360_3$, $362_3$ ; et $360_4$, $362_4$ sur la figure 6.

On a représenté sur la figure 6A un jeu de lamelles 510 portées par le demi-boîtier 110 et aptes à coopérer avec les plots de contact 360,362 portés par le porte-contact principal 300 pour commander les organes essuie glace avant. Le jeu de lames 510 représenté sur la figure 6A est adapté pour définir successivement, selon la position du porte-contact principal 300 autour de l'axe 302 : 1) une position arrêt fixe, 2) une position marche cadencée, 3) une position première vitesse, et 4) une position deuxième vitesse.

Pour cela, le jeu de lames 510 représenté sur la figure 6A comprend une lame 511 d'alimentation positive, une lame 512 d'arrêt fixe, une lame 513 de marche cadencée, une lame 514 de première vitesse et une lame 515 de seconde vitesse.

En position de repos du porte-contact principal 300, pour laquelle le galet d'indexation 352 repose dans le cran 125, le plot de contact 360 repose uniquement contre la lame d'alimentation positive 511, tandis que le plot 362 relie les lames 512 et 514 pour commander un arrêt fixe des balais d'essuie glace.

Dans la seconde position du porte-contact principal 300, pour laquelle le galet d'indexation 352 repose dans le cran 126, le plot de contact 360 relie la lame d'alimentation positive 511 à la lame de marche cadencée 513 pour alimenter les moyens d'entraînement cadencé, tandis que le plot de contact 360 relie toujours les lamelles 512 et 514.

Dans la troisième position du porte-contact principal 300, pour laquelle le galet d'indexation 352 repose dans le cran 127, le plot 360 relie la lame d'alimentation positive 511 et la lame 514 pour assurer l'entraînement des organes d'essuie glace avant selon une première vitesse, tandis que le plot de contact 362 est maintenant séparé des lames 512 et 514.

Enfin, dans la quatrième position du porte-contact principal 300, pour laquelle le galet d'indexation 352 repose dans le cran 128, le plot de contact 360 relie la lame d'alimentation positive 511 et la lame 515 pour assurer l'entraînement des balais d'essuie glace à une seconde vitesse, tandis que le plot 362 reste séparé des lamelles 512 et 514.

On a représenté sur la figure 6B une variante de réalisation du jeu de lamelles 510 précité. Selon cette variante de réalisation, la seconde position stable selon la figure 6A corresponds à une alimentation en marche cadencée est remplacée par une position instable de commande en première vitesse.

Pour cela, comme représenté sur la figure 1bis, le second cran 126 précité et prévu sur le boîtier 120 est supprimé et le premier cran 125 définit une rampe 129 inclinée progressivement en rapprochement de l'axe 302 vers le cran 127, rampe 129 qui couvre toute l'amplitude du cran 126 illustré sur la figure 1.

Par ailleurs, la lamelle 513 de marche cadencée est supprimée et les lamelles 512' et 514' correspondant respectivement aux lames d'arrêt fixe 512 et de première vitesse 514 selon le mode de réalisation de la figure 6A sont adaptées en conséquence.

Sur la figure 6B, on a également représenté les quatre positions des plots de contact 360 et 362 à l'aide d'indices 1,2,3 et 4 respectivement.

Comme indiqué précédemment en regard de la figure 6A, dans la première position du porte-contact principal 300, pour laquelle le galet d'indexation 352 repose dans le cran 125, le plot 360 est en contact seulement contre la lame d'alimentation positive 511', tandis que le plot 362 relie la lame 512' d'arrêt fixe et la lame de première vitesse 514'.

Lorsque le porte-contact principal 300 est pivoté autour de l'axe 302 pour rapprocher le galet d'indexation 352 du crantage 127, le galet de contact 352 roule contre la rampe 129 définie par le cran 125 et se rapproche de l'axe 302 par compression du ressort de sollicitation 356. La seconde position assortie d'un indice 2 sur la figure 6B correspond par conséquent à une position instable, le ressort 356 ramenant le porte-contact principal vers la première position précitée lorsque la sollicitation exercée sur la manette 200 et le porte-contact principal 300 est relâchée.

Dans cette deuxième position le galet 360 relie la lame d'alimentation positive 511' et la lame 514' pour assurer l'entraînement des balais d'essuie glace selon la première vitesse, le second plot 362 reposant uniquement contre la lame de première vitesse 514'.

Dans la troisième position du porte-contact principal 300, pour laquelle le galet d'indexation 352 repose dans le cran 127 et définit une position stable, le plot de contact 360 relie la lame d'alimentation positive 511' et la lame 514', tandis que le plot 362 est séparé des lames 512' et 514'.

Enfin, dans la quatrième position du porte-contact principal 300, pour laquelle le galet d'indexation 352 repose contre le cran 128 et définit une position stable, le plot de contact 360 relie la lame d'alimentation positive 511' et la lame 515' pour entraîner les balais d'essuie glace à une seconde vitesse, tandis que le second plot de contact 362 reste séparé des lamelles 512' et 514'.

On remarquera à l'examen de la figure 1 que la lame d'alimentation positive 511 est généralement circulaire centrée sur l'axe 302. Les lames 513, 514 et 515 présentent des plages respectives de contact en regard de la lame d'alimentation positive 511 circulaires et centrées sur l'axe 302, qui se succèdent le long du trajet de déplacement du plot de contact 360, respectivement au niveau des seconde, troisième et quatrième positions de celui-ci.

Par ailleurs, les lames 512 et 514 définissent entre elles une piste de déplacement pour le plot de contact 362. Au niveau des première et seconde positions du plot de contact 362, la distance séparant les lames 512 et 514 est inférieure au diamètre de ce plot tandis que au niveau des troisième et quatrième positions du plot de contact 362 la distance séparant les lames 512 et 514 est supérieure au diamètre du plot précité.

Les dispositions des lamelles selon la variante de réalisation 510' représentées sur la figure 6B reprennent celles précédemment décrites en regard de la figure 6A à ceci près que en raison de la suppression de la lame de commande en marche cadencée 513, la lame de commande en première vitesse 514' étend sa plage de contact en regard de la lame d'alimentation positive 511' au niveau de la seconde position (instable) du plot de contact 360.

Comme indiqué précédemment la surface 331 du porte-contact principal 300 définit une indexation de la manette 200 lors de sa rotation autour de l'axe 204, et par conséquent une indexation du porte-contact auxiliaire 400 lors de sa rotation autour de l'axe 402 parallèle à l'axe 204 précité.

De préférence, comme cela est illustré sur la figure 2, la surface 331 du porte-contact principal 300 possède deux crans 342, 344 et deux rampes 346, 348 disposées respectivement de part et d'autre des crans précités.

Les crans 342, 344 sont concaves vers l'axe de pivotement 204 pour recevoir le pion d'indexation 210 et définir deux positions stables de celui-ci, c'est-à-dire définir deux positions stables de la manette 200 dans sa rotation autour de l'axe 204.

Les rampes 346, 348 convergent vers l'axe 204 en éloignement des crans 342, 344 pour définir deux positions instables de la manette 200.

On a représenté sur la figure 6C un jeu de lamelles 550 porté par le demi-boîtier 120 et coopérant avec les plots de contact 440 et 442 portés par le porte-contact auxiliaire 400.

Sur la figure 6C on a représenté sous la référence $440_1$ et $442_1$ une première position occupée par les plots 440 et 442 lorsque le pion d'indexation 210 repose contre le fond du cran 342 (cette disposition correspond de préférence à une position de repos), sous la référence $440_2$ et $442_2$ la position occupée par les mêmes plots 440 et 442 lorsque la manette 200 est déplacée, en position instable sur la rampe 346, sous la référence $440_3$ et $442_3$ une troisième position des plots 440, 442 obtenue lorsque le pion d'indexage 210 repose contre le fond du second cran 344 et qui correspond donc également à une position stable, et enfin sous la référence $440_4$, $442_4$ une quatrième position des plots de contact 440, 442, correspondant à une position instable et obtenue lorsque le pion d'indexage 214 se déplace sur la deuxième rampe 348.

Le cas échéant, la troisième position du porte-contact auxiliaire 440 pourrait être instable.

Le jeu de lamelles 550 comprend cinq lamelles. La lamelle 552 correspond à une borne d'alimentation positive.

La lamelle 554 sert à assurer que le balai d'essuie glace de la vitre arrière s'arrête dans une position fixe prédéterminée.

La lame 556 sert à alimenter les moyens de lavage de la glace avant.

La lame 558 sert à alimenter les organes d'entraînement du balai d'essuie-glace de la vitre arrière.

Enfin, la lame 560 sert à alimenter les moyens de lavage de la vitre arrière.

Dans la première position de la manette 200 illustrée sous la référence $440_1$, $442_1$ sur la figure 6C (le pion d'indexation 210 repose contre le fond du cran 342) le pion 440 relie les lames 554 et 558 pour contrôler un arrêt en position fixe prédéterminée du balai d'essuie-glace de la vitre arrière, tandis que le plot 442 repose uniquement contre la lame d'alimentation 552.

Dans la position instable référencée en $440_2$ et $442_2$ sur la figure 6C, le plot 440 relie toujours les lames 554 et 558 tandis que le plot 442 relie les lames 552 et 556 pour commander l'alimentation des moyens de lavage de la glace avant.

Dans la seconde position stable, pour laquelle le pion d'indexation 210 repose contre le fond du cran 344, représenté sous les références $440_3$ et $442_3$ sur la figure 6C, le plot de contact 440 relie la lame d'alimentation positive 552 et la lame 558 pour commander l'entraînement du balai d'essuie glace de la vitre arrière tandis que le plot 442 est en contact uniquement contre la lame 552.

Enfin, dans la seconde position instable pour laquelle le pion d'indexation 210 se déplace sur la seconde rampe 348 et représenté sous la référence $440_4$ et $442_4$ sur la figure 6C, le plot de contact 440 relie les lames 552 et 558 pour assurer l'entraînement du balai d'essuie glace de la vitre arrière, tandis que le plot de contact 442 relie la lame 560 à la lame d'alimentation positive 552 pour alimenter les moyens de lavage de la vitre arrière.

La lame 558 définit une piste de contacts pour le plot 440, qui est centrée sur l'axe 402 de pivotement du porte-contact auxiliaire 400. Les lames 554 et 552 définissent en regard de la lame 558 des plages de contact circulaires pour le plot 440, centrées sur le même axe 402.

Par ailleurs, la lame d'alimentation positive 552 définit une piste de contacts pour le plot 442 centrée sur l'axe 402. De plus, les lames 556 et 560 définissent en regard de la lame 552 des pistes de contact pour le plot 442, centrées sur l'axe 402 précité.

**Revendications**

1. Commutateur en particulier pour la commande de lave-essuie glace de véhicules automobiles, du type comprenant dans un boîtier (100) :
    - un porte-contact principal (300) monté à pivotement sur le boîtier autour d'un premier axe (302),
    - un porte-contact auxiliaire (400) monté à pivotement sur le boîtier autour d'un second axe (402) sensiblement orthogonal au premier axe (302),
    - une manette (200) engagée sur le porte-contact principal (300) pour être liée à celui-ci lors d'une rotation autour du premier axe (302) tout en pouvant pivoter librement par rapport au porte-contact principal (300) lors d'un pivotement de la manette (200) autour d'un axe (204) perpendiculaire au premier axe (302), et
    - des moyens de liaison (250) assurant une liaison fonctionnelle entre la manette (200) et le porte-contact auxiliaire (400), telle que le pivotement de la manette (200) et du porte-contact principal (300) autour du premier axe (302) n'agisse pas sur le porte-contact auxiliaire (400), mais que le pivotement de la manette (200) autour dudit axe (204) perpendiculaire au premier axe (302) déplace le porte-contact auxiliaire (400), à pivotement autour du second axe (402), caractérisé par le fait que ledit axe (204) perpendiculaire au premier axe (302) est parallèle au second axe (402) et les moyens de liaison comprennent un doigt de commande (250) solidaire de la manette (200) et formé d'un secteur d'anneau centré sur le premier axe (302).

2. Commutateur selon la revendication 1, caractérisé par le fait que le doigt de commande (250) est engagé dans une lumière (450) traversant le porte-contact auxiliaire (400).

3. Commutateur selon la revendication 2, caractérisé par le fait que le doigt de commande (250) repose contre des protubérances hémicylindriques (456, 458) solidaires de la surface interne de la lumière (450) ménagée dans le porte-contact auxiliaire (400) et s'étendant parallèlement au second axe (402).

4. Commutateur selon l'une des revendications 1 à 3, caractérisé par le fait qu'il comprend des moyens (350, 352) d'indexation du porte-contact principal (300), comportant un pion (350) supportant un galet (352) sollicité par ressort contre un ensemble de cames (124) définies sur le boîtier (120).

5. Commutateur selon l'une des revendications 1 à 4, caractérisé par le fait qu'il comprend des moyens d'indexation du porte-contact auxiliaire (400) comportant un organe d'indexation (210) sollicité par ressort contre un ensemble de cames auxiliaires (342, 344, 346, 348) définies sur le porte-contact principal (300).

6. Commutateur selon l'une des revendications 1 à 5, caractérisé par le fait que le porte-contact auxiliaire (300) est guidé à pivotement autour du second axe (402) par l'intermédiaire d'une pluralité de languettes élastiques (404, 406, 408) engagées dans un alésage (126) ménagé dans le boîtier (120).

7. Commutateur selon l'une des revendications 1 à 6, caractérisé par le fait que chaque porte-contact supporte deux plots de contact (360, 362 ; 440, 442) qui se déplacent contre des lamelles associées (510, 550) portées par le boîtier.

8. Commutateur selon l'une des revendications 1 à 7, caractérisé par le fait qu'il comprend des plots de contact (360, 362) supportés par le porte-contact principal (300) pour se déplacer contre des lamelles associées (510) portées par le boîtier, et des moyens (350, 352) d'indexation du porte-contact principal (300) qui définissent une première position stable du porte-contact principal correspondant à une commande d'arrêt en position fixe des organes essuie-glace avant, une seconde position stable du porte-contact principal correspondant à une commande en marche cadencée des organes essuie-glace avant, une troisième position stable du porte-contact principal correspondant à une commande en première vitesse des organes essuie-glace avant, et une quatrième position stable du porte-contact principal correspondant à une commande en deuxième vitesse des organes essuie-glace avant.

9. Commutateur selon l'une des revendications 1 à 7, caractérisé par le fait qu'il comprend des plots de contact (360, 362) supportés par le porte-contact principal (300) pour se déplacer contre des lamelles associées (510') portées par le boîtier et des moyens (350, 352) d'indexation du porte-contact principal (300) qui définissent une première position stable du porte-contact principal correspondant à une commande d'arrêt en position fixe des organes essuie-glace avant, une seconde position instable du porte-contact principal correspondant à une commande en première vitesse des organes essuie-glace avant, une troisième position stable du porte-contact principal correspondant à une commande en première vitesse des organes essuie-glace avant et une quatrième position stable du porte-contact principal correspondant à une commande en deuxième vitesse des organes essuie-glace avant.

10. Commutateur selon l'une des revendications 1 à 9, caractérisé par le fait qu'il comprend des plots de contact (440, 442) supportés par le porte-contact auxiliaire (400) pour se déplacer contre des lamelles associées (550) supportées par le boîtier, et des moyens (210) d'indexation du porte-contact auxiliaire (400) qui définissent une première position stable du porte-contact auxiliaire correspondant à une commande d'arrêt en position fixe des organes essuie-glace arrière, une seconde position instable du porte-contact auxiliaire correspondant à une commande des moyens de lavage de la glace avant, une troisième position du porte-contact auxiliaire correspondant à une commande d'entraînement des organes essuie-glace arrière, et une quatrième position instable du porte-contact auxiliaire correspondant à une commande des moyens de lavage de la vitre arrière.

## Claims

1. Switch, in particular for controlling the windscreen washers and wipers of motor vehicles, of the type comprising in a casing (100):
   - a main contact support (300) mounted to pivot on the casing about a first axis (302),
   - an auxiliary contact support (400) mounted to pivot on the casing about a second axis (402) substantially at right angles to the first axis (302),
   - a hand-lever (200) engaged on the main contact support (300) in order to be connected to the latter at the time of a rotation about the first axis (302) whilst being able to pivot freely with respect to the main contact support (300) at the time of pivoting of the hand-lever (200) about an axis (204) perpendicular to the first axis (302), and
   - connecting means (250) ensuring a functional connection between the hand-lever (200) and the auxiliary contact support (400), such that the pivoting of the hand-lever (200) and of the main contact support (300) about the first axis (302) does not act on the auxiliary contact support (400), but that the pivoting of the hand-lever (200) about said axis (204) perpendicular to the first axis (302) moves the auxiliary contact support (400) to pivot about the second axis (402), characterised by the fact that said axis (204) perpendicular to the first axis (302) is parallel to the second axis (402) and the connecting means comprise a control pin (250) integral with the hand-lever (200) and formed by a sector of a ring centered on the first axis (302).

2. Switch according to Claim 1, characterised by the fact that the control pin (250) is engaged in an aperture (450) extending through the auxiliary contact support (400).

3. Switch according to Claim 2, characterised by the fact that the control pin (250) rests against semi-cylindrical protuberances (456, 458) integral with the inner surface of the aperture (450) provided in the auxiliary contact support (400) and extending parallel to the second axis (402).

4. Switch according to one of Claims 1 to 3, characterised by the fact that it comprises means (350, 352) for the indexation of the main contact support (300), comprising a peg (350) supporting a roller (352) biased by a spring against an arrangement of cams (124) defined on the casing (120).

5. Switch according to one of Claims 1 to 4, characterised by the fact that it comprises means for the indexation of the auxiliary contact support (400) comprising an indexation member (210) biased by a spring against an arrangement of auxiliary cams (342, 344, 346, 348) defined on the main contact support (300).

6. Switch according to one of Claims 1 to 5, characterised by the fact that the auxiliary contact support (300) is guided to pivot about the second axis (402) through the intermediary of a plurality of resilient tongues (404, 406, 408) engaged in a bore (126) provided in the casing (120).

7. Switch according to one of Claims 1 to 6, characterised by the fact that each contact support supports two contact studs (360, 362; 440, 442) which move against associated thin plates (510, 550) supported by the casing.

8. Switch according to one of Claims 1 to 7, characterised by the fact that it comprises contact studs (360, 362) supported by the main contact support (300) for moving against associated thin plates (510) supported by the casing, and means (350, 352) for the indexation of the main contact support (300) which define a first stable position of the main contact support corresponding to a stop control in a fixed position of the front windscreen wiper members, a second stable position of the main contact support corresponding to a control of intermittent operation of the front windscreen wiper members, a third stable position of the main contact support corresponding to a control at a first speed of the front windscreen wiper members, and a fourth stable position of the main contact support corresponding to a control at a second speed of the front windscreen wiper members.

9. Switch according to one of Claims 1 to 7, characterised by the fact that it comprises contact studs (360, 362) supported by the main contact support (300) for moving against associated thin plates (510') supported by the casing and means (350, 352) for the indexation of the main contact support (300), which define a first stable position of the main contact support corresponding to a stop control in the fixed position of the front windscreen wiper members, a second unstable position of the main contact support corresponding to a control at the first speed of the front windscreen wiper members, a third stable position of the main contact support corresponding to a control at the first speed of the front windscreen wiper members and a fourth stable position of the main contact support corresponding to a control at the second speed of the front windscreen wiper members.

10. Switch according to one of Claims 1 to 9, characterised by the fact that it comprises contact studs (440, 442) supported by the auxiliary contact support (400) for moving against associated thin plates (550) supported by the casing, and means (210) for the indexation of the auxiliary contact support (400), which define a first stable position of the auxiliary contact support corresponding to a stop control in the fixed position of the rear windscreen wiper members, a second unstable position of the auxiliary contact support corresponding to a control of the means for washing the front windscreen, a third position of the auxiliary contact support corresponding to a control for driving the rear windscreen wiper members, and a fourth unstable position of the auxiliary contact support corresponding to a control of the means for washing the rear window.

**Ansprüche**

1. Kommutator insbesondere zur Steuerung der Scheibenwischer von Kraftfahrzeugen der Bauart mit folgenden Bauteilen in einem Gehäuse (100):
    • einem Hauptkontaktträger (300), der schwenkbar um eine erste Achse (302) am Gehäuse angebracht ist,
    • einem Hilfskontaktträger (400), der schwenkbar am Gehäuse um eine zweite Achse (402) angebracht ist, welche im wesentlichen orthogonal zur ersten Achse (302) verläuft,
    • einem Hebel (200), welcher derart mit dem Hauptkontaktträger (3) zusammenwirkt, daß er mit diesem während einer Drehung um die erste Achse (302) gekoppelt ist, wobei er frei bezüglich des Hauptkontaktträgers (300) bei einer Schwenkung des Hebels (200) um eine Achse (204) schwenken kann, die senkrecht zur ersten Achse (302) verläuft, und
    • eine Verbindungsvorrichtung (250), die eine Wirkverbindung zwischen dem Hebel (200) und dem Hilfs kontaktträger (400) herstellt, derart, daß die Schwenkung des Hebels (200) und des Hauptkontaktträgers (300) um die erste Achse (302) nicht auf den Hilfskontaktträger (400) einwirkt, jedoch die Schwenkung des Hebels (200) um die genannte Achse (204), welche senkrecht zur erste Achse (302) verläuft, den Hilfskontaktträger (400) zu einer Schwenkung um die zweite Achse (402) verlagert,
**dadurch gekennzeichnet,**
daß die genannte, senkrecht zur ersten Achse (302) verlaufende Achse (204) parallel zur zweiten Achse (402) ausgerichtet ist und daß die Verbindungsvorrichtung einen Steuerfinger (250) aufweist, der fest am Hebel (200) angeordnet und als Ringsegment ausgebildet ist, welches bezüglich der ersten Achse (302) zentriert ist.

2. Kommutator nach Anspruch 1,
**dadurch gekennzeichnet,**
daß der Steuerfinger (250) in einen Schlitz (450) eingreift, welcher den Hilfskontaktträger (400) durchsetzt.

3. Kommutator nach Anspruch 2,
**dadurch gekennzeichnet,**
daß der Steuerfinger (250) auf halbzylindrischen Vorsprüngen (456, 458) aufliegt, welche von der Innenfläche des im Hilfskontaktträger (400) befindlichen Schlitzes (450) vorragen und sich parallel zur zweiten Achse (402) erstrekken.

4. Kommutator nach einem der Ansprüche 1 bis 3,
**dadurch gekennzeichnet,**
daß er eine Indexiervorrichtung (350, 352) zum Indexieren das Hauptkontaktträgers (300) mit einem Gleitstück (350) aufweist, welches eine Laufrolle (352) trägt und durch Federkraft gegen eine am Gehäuse (120) ausgebildete Nokkenanordnung (124) gedrückt ist.

5. Kommutator nach einem der Ansprüche 1 bis 4,
**dadurch gekennzeichnet,**
daß er eine Indexiervorrichtung zum Indexieren des Hilfskontaktträgers (400) mit einem Indexierorgan (210) aufweist, welche durch Federkraft gegen eine am Hauptkontaktträger (300) ausgebildete Hilfsnockenanordnung (342, 344, 346, 348) gedrückt wird.

6. Kommutator nach einem der Ansprüche 1 bis 5,
**dadurch gekennzeichnet,**
daß der Hilfskontaktträger (300) zum Schwenken um die zweite Achse (402) mittels mehrerer elastischer Zungen (404, 406, 408) geführt ist, die in eine Bohrung (126) im Gehäuse (120) eingreifen.

7. Kommutator nach einem der Ansprüche 1 bis 6,
**dadurch gekennzeichnet,**
daß jeder Kontaktträger zwei Kontakte (360, 362; 440, 442) trägt, welche sich bezüglich zugehöriger Lamellen (510, 550) verlagern, die vom Gehäuse getragen sind.

8. Kommutator nach einem der Ansprüche 1 bis 7,
**dadurch gekennzeichnet,** daß er Kontakte (360, 362), welche vom Hauptkontaktträger (300) zu einer Verlagerung bezüglich zugehöriger, vom Gehäuse getragener Lamellen (510) unterstützt sind, sowie eine Indexiervorrichtung (350, 352) des Hauptkontaktträgers (300) aufweist, welche eine erste stabile Lage des Hauptkontaktträgers entsprechend einem Haltebefehl zur Festlegung der vorderen Scheibenwischerorgane in Ruhestellung, eine zweite stabile Lage des Hauptkontaktträgers entsprechend einem Intervallbefehl für die vorderen Scheibenwischerorgane, eine dritte stabile Lage des Hauptkontaktträgers entsprechend einem Betrieb der vorderen Scheibenwischerorgane mit einer ersten Geschwindigkeit und eine vierte stabile Lage des Hauptkontaktträgers entsprechend einem Befehl für einen Betrieb der vorderen Scheibenwischerorgane mit einer zweiten Geschwindigkeit definiert.

9. Kommutator nach einem der Ansprüche 1 bis 7,
**dadurch gekennzeichnet,** daß er Kontakte (360, 362) aufweist, welche vom Hauptkontaktträger (300) zu einem Verlagern bezüglich zugehöriger, vom Gehäuse getragener Lamellen (510') unterstützt sind, sowie eine Indexiervorrichtung (350, 352) zum Indexieren des Hauptkontaktträgers (300) aufweist, welche eine erste stabile Lage des Hauptkontaktträgers entsprechend einem Haltebefehl zur Festlegung der vorderen Scheibenwischerorgane in Ruhestellung, eine zweite instabile Lage des Hauptkontaktträgers entsprechend einem Befehl zum Betrieb der vorderen Scheibenwischerorgane mit einer ersten Geschwindigkeit, eine dritte stabile Lage des Hauptkontaktträgers entsprechend einem Befehl zum Betrieb der vorderen Scheibenwischerorgange mit einer ersten Geschwindigkeit und eine vierte stabile Lage des Hauptkontaktträgers entsprechend einem Befehl zum Betrieb der vorderen Scheibenwischerorgane mit einer zweiten Geschwindigkeit definiert.

10. Kommutator nach einem der Ansprüche 1 bis 9,
**dadurch gekennzeichnet, daß** er Kontakte (440, 442), welche vom Hilfskontaktträger (400) zur Verlagerung bezüglich zugehöriger, vom Gehäuse getragener Lamellen (550) unterstützt sind, sowie eine Indexiervorrichtung (210) des Hilfskontaktträgers (400) aufweist, welche eine erste stabile Lage des Hilfskontaktträgers bezüglich eines Haltebefehls in Ruhestellung der hinteren Scheibenwischerorgane, eine zweite instabile Lage des Hilfskontaktträgers entsprechend eine Befehl zur Betätigung der Waschanlage der Frontscheibe, eine dritte Lage des Hilfskontaktträgers entsprechend einem Befehl zum Betrieb der hinteren Scheibenwischerorgane und eine vierte instabile Stellung des Hilfskontaktträgers entsprechend einem Befehl zum Betrieb der Waschanlage der Heckscheibe definiert.

FIG_1bis

FIG_1

EP 0 252 800 B1

FIG._2

FIG.3

FIG.4

FIG.5

FIG. 6 B

FIG. 6 A

FIG. 6 C